Europäisches Patentamt

(19) European Patent Office

Office européen des brevets

(11) Publication number: **0 285 235 B1**

(12) **EUROPEAN PATENT SPECIFICATION**

(45) Date of publication of patent specification:
04.09.91 Bulletin 91/36

(51) Int. Cl.⁵: **A23B 7/10, A23B 7/02,
A23B 7/00, A23B 7/153**

(21) Application number: 88300713.0

(22) Date of filing: 28.01.88

(54) Method and apparatus for treating fresh vegetable products.

(30) Priority: 09.02.87 US 12420

(43) Date of publication of application:
05.10.88 Bulletin 88/40

(45) Publication of the grant of the patent:
04.09.91 Bulletin 91/36

(84) Designated Contracting States:
AT BE CH DE ES FR GB GR IT LI LU NL SE

(56) References cited:
BE-A- 905 014
DE-A- 3 624 035
US-A- 3 987 208
US-A- 4 103 035
US-A- 4 374 153

(56) References cited:
CHEMICAL ABSTRACTS, vol. 99, no. 3, July
1983, page 509, abstract no. 21155p, Colum-
bus, Ohio, US; & JP-A-58 51 842 (TANAKA
HIDEAKI) 26-03-1983
FOOD TECHNOLOGY, vol. 38, no. 1, January
1984, page 138, Chicago, Illinois, US; "Aids fo
food technologists"

(73) Proprietor: McCORMICK & COMPANY, INC.
11350 McCormick Road
Hunt Valley Maryland 21031 (US)

(72) Inventor: Hsieh Ron Ching
1615 Green Spring Drive
Lutherville, MD 21093 (US)
Inventor: Albrecht James Joseph
111 Hamlet Hill Road, Apt 1208
Baltimore, MD 21210 (US)

(74) Representative: Woodward, John Calvin et al
VENNER SHIPLEY & CO. 368 City Road
London EC1V 2QA (GB)

## Description

### BACKGROUND AND SUMMARY OF THE INVENTION

The present invention relates to treatment of fresh vegetable products and particularly fresh herbs and spices so as to preserve the desirable qualities of these products while extending their shelf life.

In the packaged food field, attempts have been made to package vegetable products so that the qualities or characteristics of the products will remain stable over extended periods thus enabling food merchants to stock such products for sale to consumers while reducing losses due to spoilage. In many of such products, some of the characteristics that cause consumers to purchase them are difficult to preserve for extended periods without sacrificing other qualities of these products. This problem is especially acute with fresh herbs such as those of the leafy types and a number of spices. Specifically, it is desired to preserve the color, flavor, aroma and overall natural or comminuted appearance of such products while enabling a producer to package the product with available packaging equipment and without resort to special types of containers while providing an extended shelf life for the packaged product.

Early endeavors in this field which have emphasized the extension of self life have resorted to treatments of the fresh vegetable product which include rather severe dehydration of the product. Sterilization by heat, irradiation, or chemical sterilizers have also been used. The adverse impact of such processes on a number of characteristics of the products are well known and marketing demands for fresh appearing products have lessened interest in such techniques.

More recent attempts to provide better appearing and tasting products have employed a variety of chemical preservatives to maintain appearance and extend shelf life. While some of these have been successful in extending shelf life, the use of such chemicals has not been attractive to consumers. In some instances, these types of preservatives detract from the taste quality of the product and some of the preservatives are no longer permitted in combination with food products.

Still other procedures involve substantial alteration of the fresh product so that the natrual appearance characteristics are substantially abandoned. For example, some products are finely chopped and mixed with natural or blended oils. Others have been pureed or packaged as pastes, which are mixed with available anti-oxidants and chemical preservatives. Food processors have also used canning or freezing but these alternatives will also adversely affect the significant properties of the vegetable product.

DE-A-3,624,035 discloses a process for treating a vegetable product with a solution containing citric acid, ascorbic acid and between 1 and 10% glycerine.

In Food Technology 38, 138 (1984) there is disclosed an anti-oxidant preparation comprising citric acid, ascorbic acid and propylene glycol.

In accordance with a first aspect of the present invention there is provided a method of treating fresh vegetable product such as spices, herbs and the like comprising the steps of :

a. washing the product with a first liquid bath including an anti-browning solution ;

b. removing excess surface liquid of the first bath;

c. immersing the product in a second liquid bath containing an humectant at a temperature of between 80-150°C to lower the water content of the product ;

d. removing excess surface liquid of the second bath.

In a second aspect the invention provides a method of treating fresh vegetable product such as spices, herbs and the like comprising the steps of :

a. washing the product with a chilled liquid ;

b. washing the product with a first liquid bath including an anti-oxidant acid solution where the acid is a mixture of citric acid and an acid selected from the group consisting of ascorbic acid and erythorbic acid ;

c. removing excess surface liquid of the first bath by drawgin the product, and, subsequent to draining the product, drying the product to reduce the moisture content of the product to a selected level ;

d. immersing the product in a second liquid bath maintained at a selected elevated temperature of between 80° to 150°C and containing an humectant to lower the water content of the product, wherein the humectant is selected from the group consisting of glycerine, sorbitol and proplyene glycol ;

e. removing excess surface liquid of the second bath by draining the product ;

f. cooling the product by passing the product through a cooling chamber the atmosphere of which is maintained at approximately −18° to 8°C for an interval of time such that the temperature of the product is reduced to at least ambient temperature.

In a third aspect, the invention provides apparatus for carrying out the methods of the first and second aspects of the invention, which apparatus comprises a conveyor means for transporting the product from a supply to a discharge point, a washing means for washing the product with a liquid, said washing means including a drain portion and being located to receive the product discharged at said discharge point, said washing means including conveyor means for carrying the product through said washing means to said drain portion to another discharge point, a first bath container means including a drain section for containing an anti-oxidant liquid agent located adjacent said another discharge point, said first bath container means including conveyor means for carrying the product through said washing means to said drain section thereof to another discharge point, a drying chamber, a second bath container means for a liquid humectant, transport means for moving the product from said another discharge point of said first bath container means to and through said drying chamber and for depositing the product in said second bath container means, means for heating the contents of said second bath container means to a selected temperature, said second bath container means including conveyor means for carrying the product therethrough to a drain portion located externally of said second bath container means, a cooling chamber, said drain portion including conveyor means for carrying the product therethrough and through said cooling chamber to a final discharge point.

The methods and apparatus of the present invention are intended for treating freshly harvested vegetable products so that the important qualities thereof associated with freshness such as colour, natural appearance, flavour, taste, aroma and product integrity will be retained while the shelf life of the product will be appreciably extended as compared to an untreated product. In addition, the method of this invention will yield a product that is substantially free of pathogens, enzyme activities, yeats and molds and will exhibit low microbiological counts.

In one embodiment, the method and apparatus for treating the vegetable products such as herbs and spices includes a conveyor system for moving the product from a supply to a chilled water washing station which includes a drain portion. A second station is provided where the product is steeped in a solution of citric and ascorbic or erythorbic acid and then drained. The product is then dried quickly at a third station in a fluidized bed dryer and then passed to a heated humectant bath at a fifth station and then drained again. At a sixth station, the product is rapidly cooled in a cooling chamber and, at a seventh station, the product may be destemmed, if required, and then, if desired, chopped to any desired piece sizes prior to being packaged.

In a preferred form, the humectant used is synthetic or natural glycerine which is characterized by meeting the USP grade standard of 96% pure glycerine and about 4% water content. Also, the drying and cooling steps are preferably of very short duration which is beneficial not only in terms of the integrity of the product but also in enhancement of the production capacity of the method and apparatus. Most importantly, the method is capable of providing a satisfactory product without the use of commonly and previously employed chemical preservatives.

The foregoing and other advantages will become apparent as consideration is given to the following detailed description and the accompanying drawings, in which :

## BRIEF DESCRIPTION OF THE DRAWINGS

FIGURE 1 is a flow chart setting forth the method of this invention ; and
FIGURE 2 is a schematic illustration of the apparatus used with the method.

## DETAILED DESCRIPTION

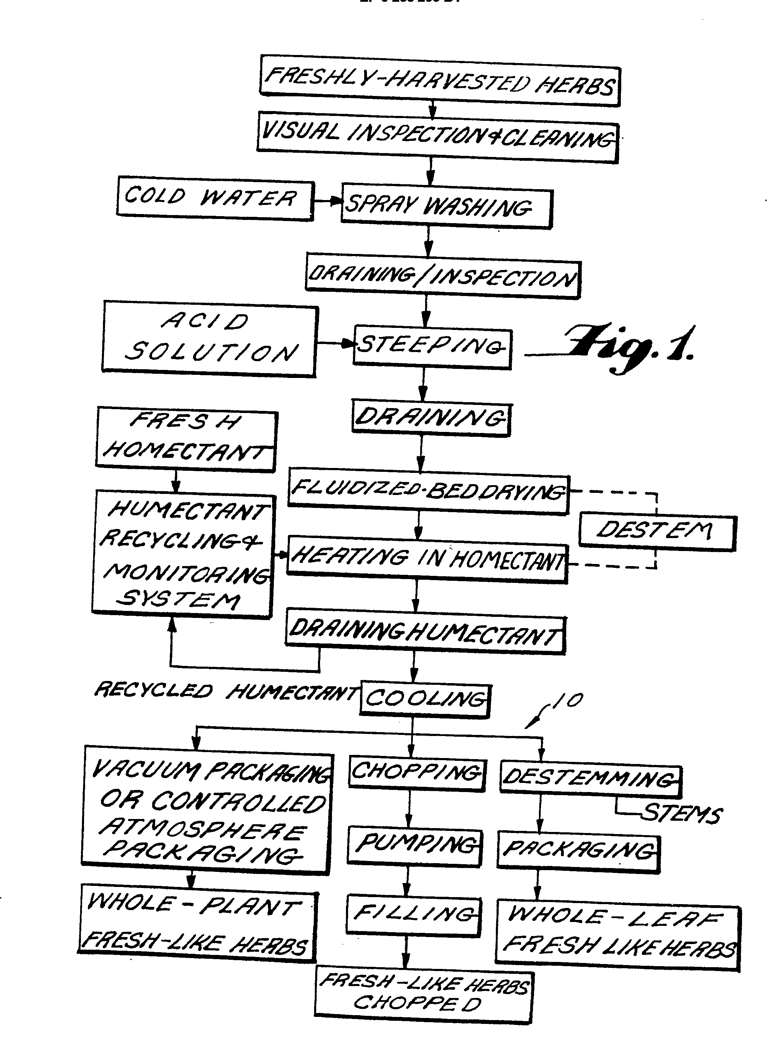

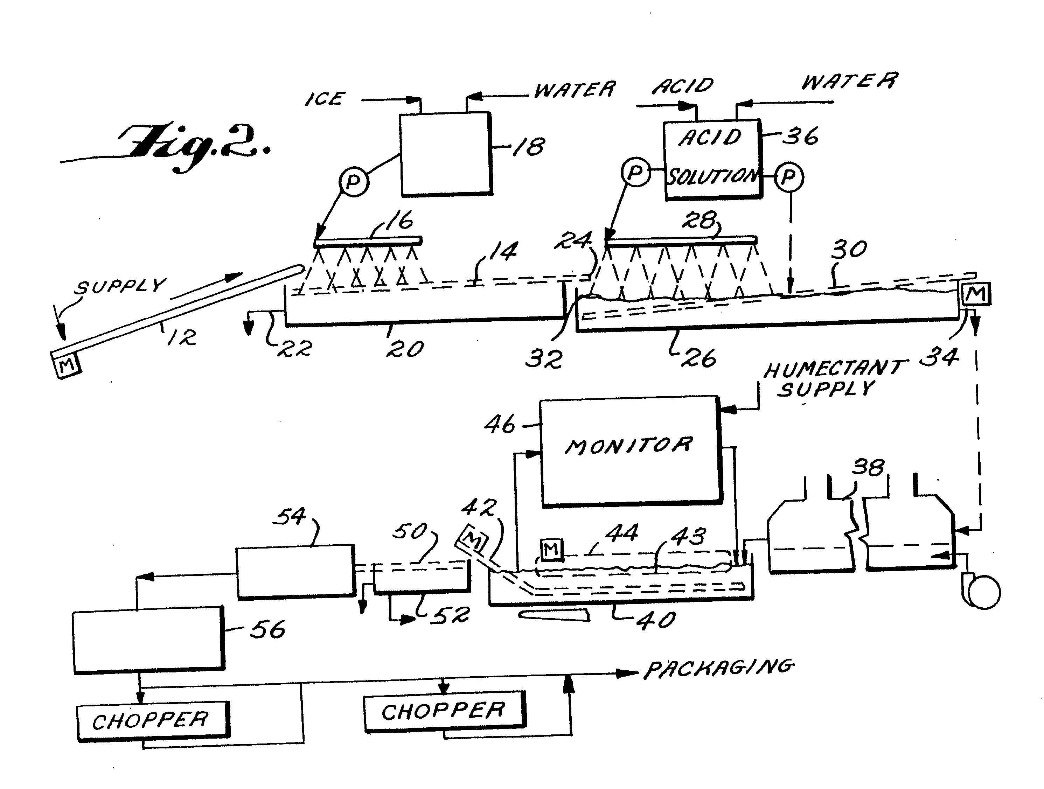

Referring now to the drawings, wherein like numerals designate corresponding parts throughout the views, there is shown in Figure 1 a flow chart showing the sequence of steps that may be employed in the present invention. It is desired that the process be substantially continuous so that, as is customary in production facilities, the speed of the throughput conveyors will be set to accommodate the step in the process requiring the greatest dwell time. In handling of freshly harvested herbs, it will be appreciated by those skilled in the art that for different herbs, different specific treatment times throughout the steps of the process may be required. While Figure 1 will be self explanatory when read in conjunction with the following description of the apparatus and specific process steps of Figure 2, it will be noted that, in Figure 1, several alternative packaging processes are available to a user of the process after the final cooling step 10. The various packaging techniques presently available can be employed and their selection will, in large part, be determined by the type of vegetable product being treated. While the process for the present invention is theoretically applicable and useful with a wide variety of vegetable products, it is particularly applicable to preservation of herbs and spices as such products when freshly cut must reach the market within approximately three days and exhibit a shelf life of only approximately seven days. It is not uncommon for many leafy herbs and spices to lose much of their flavoring capacity relatively rapidly as compared to the more robust vegetable products such as cabbage, spinach, peas, carrots, tomatoes and the like. It is an object of the present invention to enable a food processor to treat the freshly harvested vegetable products such as herbs so that the treated product can be packaged conventionally and exhibit a shelf life of from four weeks to as much as three to six months without significant deterioration in the desirable qualities of appearance, color, flavoring capacity, aroma and overall product integrity. The process is especially useful with leafy herbs such as basil but can be used with a number of herbs and spices such as dill, marjoram, sage, thyme, oregano, rosemary, mint, parsley and similar vegetable products such as garlic, onion and those of the pepper family which include paprika, red pepper and similar products.

In carrying out the process, the freshly harvested herbs are taken from a supply located upstream of a conveyor 12 which at its discharge end drops the vegetable product onto a second conveyor 14 which passes underneath a bank of spray nozzles 16. The nozzles 16 are preferably fed with chilled water at approximately 4°C from a tank 18. The conveyor 14 will of course be perforated so that the sprayed water will pass to a container 20 including an overflow outlet 22. As illustrated, the leftward portion of the conveyor 14 will function as a washing area while the rightward portion will function as a draining area. At the discharge end 24, the vegetable product will be deposited in a first bath container 26 over the leftward portion of which a second bank of nozzles 28 are provided for spraying an anti-oxidant solution, as described below.

In the container 26, a sloped transport conveyor 30 is provided, the leftward portion of which is substantially submerged beneath the liquid level 32, which is maintained by operation of a suitable drain 34, as is conventional. The rightward portion of the conveyor 30 extends above the liquid level 32 to thereby function as a drain portion.

Each of the conveyors of the process are preferably of the endless belt type and should be made of stainless steel wire mesh to facilitate drainage and minimize transporting of the liquid of each bath.

The anti-oxidant solution sprayed from the nozzles 28 may be supplied from a make-up tank 36. The solution is preferably an anti-oxidant reducing agent and it has been found that a combination of citric acid and ascorbic acid in a solution of 0.1 to 1.0 percent by weight in water is suitable for retarding browning which results from oxidation of the many vegetables products but particularly those of the leafy type. The ascorbic acid may be replaced with erythorbic and the throughput speed in the container 26 will, of course, depend upon the character and quantity of the vegetable product being treated. Other anti-oxidants may be employed such as, for example, sodium bisulfite. In general, steeping need not consume any more time than sufficient to completely cover the surfaces of the product.

Each treatment tank station 20 and 26 may employ a deep tank for submerging the product for treatment instead of spraying or a combination of spraying and submersion may be used.

From the discharge end of conveyor 30, the drained product is transported by a transport conveyor to a fluidized bed drying chamber 38. At this point, the product can be destemmed to facilitate the subsequent treatment. In general, the stems of the plants have no value and the presence of the stems can delay processing due to the size of the stems. In this arrangement, the transport conveyor may simply extend into the interior of the chamber 38 or it may discharge to another conveyor which performs the function of transporting the vegetable product into the chamber 38. Preferably, the fluidized bed dryer applies heated air within the temperature range of 27° to 38°C for a length of time sufficient to reduce the moisture content of the vegetable product to a level of between 30% to 80% by weight but, preferably, on the order of 60% to 70%. The drying removes any remaining excess surface liquid.

From the fluidized bed drying chamber 38, the product is deposited at one end of a second bath container 40 in which is located a substantially submerged endless belt conveyor 42. Since any vegetable products, especially herbs, may have some buoyancy in liquid, a submerging conveyor 44 is also provided having a lower side located beneath the liquid level 43.

The second container bath serves to immerse the vegetable product in an humectant which may be one of glycerin, sorbitol, propylene glycol and other polyhydric water binders or a combination of these. In a preferred embodiment, synthetic glycerin is employed as it has very stable properties and exhibits no unpleasant aftertaste. As is known, a humectant will draw water from wet organic matter such as vegetable products. Further, according to the present invention, the humectant is heated to a temperature within the range of 80° to 150°C to facilitate penetration of the humectant into the vegetable product as well as to substantially, if not completely, terminate enzyme and microbiological activity in the vegetable product. As a result of treatment in the bath 40, the water level of the vegetable product will be further reduced so that the resulting water activity of the product, as that term is defined in British Patent 2014429A, will be in the order of 0.6.

One of the objects of the present invention is to render the vegetable product negative in terms of peroxidase activity. As has been recognized, peroxidase is an enzyme that is relatively more resistant to inactivation by heat than other detectable enzymes which exist in fresh vegetable products. A reliable test for peroxidase activity is discussed by Kramer and Twigg in their work "Quality Control for the Food Industry", Vol. 2, p 210. It will be appreciated then that a negative test result for peroxidase will serve as a good indicator of the success of the process of this invention in terminating harmful enzyme activity.

By way of example, treatment of samples of basil in the process of the present invention was carried out where the second bath container was glycerin at approximately 95°C and the treatment duration was for two minutes. The water activity was reduced to 0.65 and the resulting shelf life at a temperature range of 4°C to 33°C was approximately three to six months without appreciable change in appearance and with non-detectable enzyme activity and no significant microbiological counts. Flavor and aroma values were retained.

A monitoring system 46 for the bath 40 is preferably employed, particularly in high production capacity facilities. In such a system, sampling of the bath will be effected and the water content measured using one of the wet chemistry methods, e.g., titration, instrumental analysis or conventional heating methods. When the monitoring device detects a level of water in the sample above a selected amount, an alarm can sound to alert a worker to adjust the glycerin/water ratio in the bath 40 to offset the accumulated water. Alternately, automatic monitoring and dispensing of the required amount of glycerin can be effected with available process control techniques.

From the discharge end of the conveyor 42, the product is passed to a drain conveyor 50 located above a container 52 in which drippings of glycerin can be recovered and recycled back to the bath 40. Thereafter, on the conveyor 50, the product is passed to a cooling chamber 54 where the product is quickly chilled to halt the effects of any residual heat from the bath 40. The duration of treatment should be such that at the least, the temperature of the product is lowered to room temperature or approximately 20°C although lower temperatures, if desired, can be achieved. Preferably the cooling is effected in five minutes or less.

From the cooling chamber 54, some types of vegetable products such as those having large stems that have not previously been removed can be passed to a destemming zone 56 where destemming is carried out. Thereafter, several options are available to a user of the process. Specifically, some types of herbs and spices are conventionally chopped or finely comminuted prior to packaging. Others are simply packaged such as the leafy herbs. In such circumstances, it may be desirable to employ vacuum packaging as contemplated in the schematic of Figure 1. Vacuum packaging or controlled atmosphere packaging is presently available and can be usefully employed with a number of herbs and spices.

The process of the present invention and the apparatus lend themselves to batch processing in large quantities so that the operator will have the option of diverting selected portions of the output of the process to one of several packaging alternatives.

## Claims

1. A method of treating fresh vegetable product such as spices, herbs and the like comprising the steps of :

   a. washing the product with a first liquid bath including an anti-browning solution ;

   b. removing excess surface liquid of the first bath;

   c. immersing the product in a second liquid bath containing an humectant at a temperature of between 80-150°C to lower the water content of the product ;

   d. removing excess surface liquid of the second bath.

2. The invention as claimed in claim 1, including the step of washing the product prior to step (a).

3. The invention as claimed in claim 2, wherein the step of washing the product prior to step (a) includes washing the product with a chilled liquid.

4. The invention as claimed in claim 1, wherein the step of washing the product in the first bath includes using a mixture of citric and ascorbic acid in water in the first bath.

5. The invention as claimed in claim 4, wherein the mixture is a solution of 0.1% to 1.0% of citric and ascorbic acid mixture.

6. The invention as claimed in claim 1, wherein the step of washing the product in the first bath includes using a mixture of erythorbic and citric acid in water in the first bath.

7. The invention as claimed in claim 6, wherein the mixture is a solution of 0.1% to 1.0% of erythorbic and citric acid solution.

8. The invention as claimed in claim 1, wherein the step of removing excess surface liquid includes draining the product.

9. The invention as claimed in claim 8, wherein the step of removing excess surface liquid further includes, subsequent to draining the product, drying the product to reduce the moisture content of the product.

10. The invention as claimed in claim 9, wherein the step of drying the product includes exposing the product to heat sufficient to reduce the moisture content of the product to a level of between 30% to 80% by weight.

11. The invention as claimed in claim 9, wherein the step of drying the product includes exposing the product to heat sufficient to reduce the moisture content of the product to a level of between 60% to 80% by weight.

12. The invention as claimed in claim 9, wherein the step of drying includes using a fluidized bed dryer to dry the product.

13. The invention as claimed in claim 12, wherein the step of drying includes passing air at a temperature of approximately 25 to 38°C by the product.

14. The invention as claimed in claim 1, wherein the humectant is selected from the group consisting of glycerine, sorbitol and propylene glycol.

15. The invention as claimed in claim 1, wherein the second bath is glycerine.

16. The invention as claimed in claim 1, wherein the second bath is synthetic glycerine.

17. The invention as claimed in claim 1, wherein during step (d), the method includes the step of recovering the liquid of the second bath and recycling the recovered liquid to the second bath.

18. The invention as claimed in claim 1, wherein subsequent to step (d), the method includes the step of cooling the product.

19. The invention as claimed in claim 18, wherein the step of cooling the product comprises passing the product through a cooling chamber the atmosphere of which is maintained at approximately −18 to 8°C for an interval of time such that the temperature of the product is reduced to at least ambient temperature.

20. The invention as claimed in claim 1, including the step of comminuting the product subsequent to step (d).

21. The invention as claimed in claim 1, wherein the product is of the type having a stem and the method includes the step of destemming the product subsequent to step (d) and followed by the step of comminuting the product.

22. The invention as claimed in claim 20, further including the step of packaging the product directly after the comminuting step.

23. The invention as claimed in claim 18, including the step of comminuting the product subsequent to step (d).

24. The invention as claimed in claim 18, wherein the product is of the type having a stem and the method includes the step of destemming the product subsequent to step (d) and followed by the step of comminuting the product.

25. The invention as claimed in claim 23, further including the step of packaging the product directly after the comminuting step.

26. The invention as claimed in claim 1, including the step of monitoring the concentration of the humectant in the second bath and adding additional humectant in the event the concentration thereof is detected to be below a selected value.

27. The invention as claimed in claim 1, wherein conveyor means are provided to move the product through steps of the method and the method includes the step of moving the product on the conveyor means from a supply through the first bath.

28. The invention as claimed in claim 27, wherein the conveyor means includes porous sections and at least portions of the draining steps take place on said porous sections.

29. A method of treating fresh vegetable product such as spices, herbs and the like comprising the steps of :

a) washing the product with a chilled liquid ;

b) washing the product with a first liquid bath including an anti-oxidant acid solution where the acid is a mixture of citric acid and an acid selected from the group consisting of ascorbic acid and erythorbic acid ;

c) removing excess surface liquid of the first bath by draining the product, and, subsequent to draining the product, drying the product to reduce the moisture content of the product to a selected level ;

d) immersing the product in a second liquid bath maintained at a selected elevated temperature of between 80° to 150°C and containing an humectant to lower the water content of the product, wherein the humectant is selected from the group consisting of glycerine, sorbitol and propylene glycol ;

e) removing excess surface liquid of the second bath by draining the product ;

f) cooling the product by passing the product through a cooling chamber the atmosphere of which is maintained at approximately −18° to 8°C for an interval of time such that the temperature of the product is reduced to at least ambient temperature.

30. The invention as claimed in claim 29, wherein the step of cooling the product is completed within five minutes.

31. The invention as claimed in claim 1, wherein the product includes stems and including the step of removing the stems prior to passing the product to the second liquid bath.

32. Apparatus for carrying out the method of any one of claims 1-31 comprising : conveyor means for transporting the product from a supply to a discharge point, a washing means for washing the product with a liquid, said washing means including a drain portion and being located to receive the product discharged at said discharge point, said washing means including conveyor means for carrying the product through said washing means to said drain portion to another discharge point, a first bath container means including a drain section for containing an anti-oxidant liquid agent located adjacent said another discharge point, said first bath container means including conveyor means for carrying the product through said washing means to said drain section thereof to another discharge point, a drying chamber, a second bath container means for a liquid humectant, transport means for moving the product from said another discharge point of said first bath container means to and through said drying chamber and for depositing the product in said second bath container means, means for heating the contents of said second bath container means to a selected temperature, said second bath container means including conveyor means for carrying the product therethrough to a drain portion located externally of said second bath container means, a cooling chamber, said drain portion including conveyor means for carrying the product therethrough and through said cooling chamber to a final discharge point.

33. The invention as claimed in claim 32, wherein said second bath container means includes monitoring means for monitoring the condition of the contents of said second bath container means.

34. The invention as claimed in claim 33, wherein said monitoring means includes conditioning means for restoring the condition of the contents of said second bath container means in response to detection of a selected condition.

35. The invention as claimed in claim 32, wherein said draining portion includes means for passing material recovered by said draining portion to said second bath container means.

**Patentansprüche**

1. Ein Verfahren für die Behandlung frischer vegetabilischer Produkte wie Gewürze, Kräuter und Produkte ähnlicher Art, umfassend die Schritte :
   a. des Waschens des Produkts mit Hilfe eines ersten eine bräunungshemmende Lösung enthaltenden Flüssigkeitsbades ;
   b. des Entfernens überschüssiger Oberflächenflüssigkeit des ersten Bades ;
   c. Untertauchen des Produktes in ein zweites ein Feuchthaltemittel enthaltenden Flüssigkeitsbades bei einer Temperatur zwischen 80-150°C, um den Wassergehalt des Produktes zu senken ;
   d. des Entfernens überschüssiger Oberflächenflüssigkeit des zweiten Bades.

2. Die Erfindung nach Anspruch 1 einschließlich des Schrittes der Produktwaschung vor Schritt (a).

3. Die Erfindung nach Anspruch 2, wobei der Schritt der Produktwaschung vor Schritt (a) Waschen des Produkts mit einer gekühlten Flüssigkeit umfaßt.

4. Die Erfindung nach Anspruch 1, wobei der Schritt der Produktwaschung in dem ersten Bad die Verwendung eines Gemisches von Zitronen- und Ascorbinsäure in Wasser in dem ersten Bad einschließt.

5. Die Erfindung nach Anspruch 4, wobei das Gemisch eine Lösung von 0,1% bis 1,0% des Gemisches von Citrin- und Ascorbinsäure ist.

6. Die Erfindung nach Anspruch 1, wobei der Schritt der Produktwaschung im ersten Bad Verwendung eines Gemisches von Isoascorbin- und Zitronensäure in Wasser in dem ersten Bad einschließt.

7. Die Erfindung nach Anspruch 6, wobei das Gemisch eine Lösung von 0,1% bis 1,0% Isoascorbin- und Zitronensäurelösung ist.

8. Die Erfindung nach Anspruch 1, wobei der Schritt des Entfernens überschüssiger Oberflächenflüssigkeit Dränieren des Produktes einschließt.

9. Die Erfindung nach Anspruch 8, wobei der Schritt des Entfernens überschüssiger Oberflächenflüssigkeit nach dem Dränieren des Produkts auch Trocknen des Produkts zwecks Verringerns des Feuchtigkeitsgehaltes des Produkts einschließt.

10. Die Erfindung nach Anspruch 9, wobei der Schritt des Produkttrocknens Einwirkung genügend hoher Wärme auf das Produkt einschließt, um den Feuchtigkeitsgehalt des Produktes auf einen Stand zwischen 30% und 80% nach Gewicht zu reduzieren.

11. Die Erfindung nach Anspruch 9, wobei der Schritt des Produkttrocknens Einwirkung genügend hoher Wärme auf das Produkt einschließt, um den Feuchtigkeitsgehalt des Produkts auf einen Stand zwischen 60% und 80% nach Gewicht zu reduzieren.

12. Die Erfindung nach Anspruch 9, wobei der Schritt des Trocknens die Verwendung eines Wirbelschichttrockners einschließt, um das Produkt zu trocknen.

13. Die Erfindung nach Anspruch 12, wobei der Schritt des Trocknens Überströmen des Produktes mit Luft bei einer Temperatur von etwa 25 bis 38°C einschließt.

14. Die Erfindung nach Anspruch 1, wobei das Feuchthaltemittel aus der Glycerin, Sorbitol und Propylenglycol umfassenden Gruppe ausgewählt wird.

15. Die Erfindung nach Anspruch 1, wobei das zweite Bad Glycerin ist.

16. Die Erfindung nach Anspruch 1, wobei das zweite Bad synthetisches Glycerin ist.

17. Die Erfindung nach Anspruch 1, wobei während des Schrittes (d) das Verfahren den Schritt des Zurückgewinnens der Flüssigkeit des zweiten Bades und des Zurückleitens der zurückgewonnenen Flüssigkeit in das zweite Bad einschließt.

18. Die Erfindung nach Anspruch 1, wobei das Verfahren im Anschluß an Schritt (d) den Schritt der Produktkühlung einschließt.

19. Die Erfindung nach Anspruch 18, wobei der Schritt der Produktkühlung Hindurchleiten des Produktes durch einen Kühlraum einschließt, dessen Atmosphäre bei einer Temperatur von etwa −18 bis 8°C erhalten wird, und zwar während einer solchen Zeitspanne, daß die Temperatur des Produktes mindestens auf Umgebungstemperatur reduziert wird.

20. Die Erfindung nach Anspruch 1, einschließlich des Schrittes der Produktzerkleinerung nach Schritt (d).

21. Die Erfindung nach Anspruch 1, wobei das Produkt der einen Stengel umfassenden Art ist und das Verfahren den Schritt der Produktentstengelung nach Schritt (d) und im Anschluß daran den Schritt der Produktzerkleinerung einschließt.

22. Die Erfindung nach Anspruch 20 einschließlich des weiteren Schrittes des Produktverpackens unmittelbar nach dem Zerkleinerungsschritt.

23. Die Erfindung nach Anspruch 18, einschließlich des Schrittes der Produktzerkleinerung im Anschluß an Schritt (d).

24. Die Erfindung nach Anspruch 18, wobei das Produkt der einen Stengel umfassenden Art ist und das Verfahren den Schritt der Produkt-entstengelung nach Schritt (d) und im Anschluß daran den Schritt der Produktzerkleinerung einschließt.

25. Die Erfindung nach Anspruch 23 einschließlich des weiteren Schrittes des Produktverpackens unmittelbar nach dem Zerkleinerungsschritt.

26. Die Erfindung nach Anspruch 1 einschließlich des Schrittes der Überwachung der Feuchthaltemittelkonzentration im zweiten Bad und des Zusatzes weiteren Feuchthaltemittels im Falle daß dessen Konzentration sich als unterhalb eines festgesetzten Wertes erweist.

27. Die Erfindung nach Anspruch 1, wobei Fördermittel vorgesehen sind, um das Produkt durch Schritte des Verfahrens zu befördern, und wobei das Verfahren den Schritt der Beförderung des Produktes auf den Fördermitteln von einer Produktquelle aus durch das erste Bad hindurch einschließt.

28. Die Erfindung nach Anspruch 27, wobei das Fördermittel poröse Abschnitte umfaßt und die Dränierschritte mindestens um Teil auf besagten porösen Abschnitten vor sich gehen.

29. Ein Verfahren zur Behandlung frischer vegetabilischer Produkte wie Gewürze, Kräuter und ähnlicher Produkte umfassend die Schritte

a) des Waschens des Produktes mit einer gekühlten Flüssigkeit ;

b) des Waschens des Produktes mit Hilfe eines ersten, eine antioxidante Säurelösung umfassenden Flüssigkeitsbades, wobei die Säure ein Gemisch von Zitronensäure und einer Säure aus der Ascorbinsäure und Isoascorbinsäure umfassenden Gruppe ist ;

c) Entfernen überflüssiger Oberflächenflüssigkeit des ersten Bades durch Dränieren des Produkts und im Anschluß an das Dränieren des Produkts Trocknen des Produkts, um den Feuchtigkeitsgehalt des Produkts auf einen festgesetzten Stand zu reduzieren ;

d) Untertauchen des Produkts in ein zweites Flüssigkeitsbad, das bei einer ausgewählten erhöhten Temperatur zwischen 80° und 150°C erhalten wird und ein Feuchthaltemittel enthält, um den Wassergehalt des Produktes zu senken, wobei das Feuchthaltemittel aus der Glycerin, Sorbitol und Propylenglycol umfassenden Gruppe ausgewählt wird ;

e) Entfernen überschüssiger Oberflächenflüssigkeit des zweiten Bades durch Dränieren des Produktes ;

f) Kühlen des Produktes durch Hindurchleiten des Produktes durch einen Kühlraum, dessen Atmosphäre bei einer Temperatur von etwa −18° bis 8°C erhalten wird, und zwar während einer solchen Zeitspanne, daß die Temperatur des Produktes mindestens auf Umgebungstemperatur reduziert wird.

30. Die Erfindung nach Anspruch 29, wobei der Schritt der Produktkühlung innerhalb von fünf Minuten abgeschlossen wird.

31. Die Erfindung nach Anspruch 1, wobei das Produkt Stengel umfaßt und einschließlich des Schrittes der Stengelbeseitigung bevor das Produkt dem zweiten Flüssigkeitsbad zugeleitet wird.

32. Anlage zur Durchführung des Verfahrens nach einem oder mehreren der Ansprüche 1-31, umfassend : Fördermittel zur Beförderung des Produkts von einer Produktquelle zu einem Abgabepunkt, eine Waschvorrichtung zum Waschen des Produkts mit einer Flüssigkeit, wobei die besagte Waschvorrichtung einen Dränierabschnitt umfaßt, der so angeordnet ist, daß ihm das von dem besagten Abgabepunkt abgegebene Produkt zugeführt wird und die besagte Waschvorrichtung Fördermittel zur Beförderung des Produkts zu einem weiteren Abgabepunkt umfaßt, und zwar durch besagte Waschvorrichtung hindurch zu dem besagten Dränierabschnitt, eine erste Badbehältervorrichtung einschließlich eines Dränierabschnittes für ein antioxidantes flüssiges Mittel anschließend an den besagten weiteren Abgabepunkt, wobei die besagte erste Badbehältervorrichtung Fördermittel zur Beförderung des Produkts zu einem weiteren Abgabepunkt umfaßt, und zwar durch besagte Waschvorrichtung hindurch zu dessen besagtem Dränierabschnitt, einen Trockenraum, eine zweite Badbehältervorrichtung für ein flüssiges Feuchthaltemittel, Fördermittel zur Beförderung des Produkts von besagtem weiteren Abgabepunkt der besagten ersten Badbehältervorrichtung zu und durch den besagten Trockenraum hindurch und zur Absetzung des Produkts in der besagten zweiten Badbehältervorrichtung, Mittel zum Erhitzen des Inhalts der besagten zweiten Badbehältervorrichtung auf eine ausgewählte Temperatur, wobei die besagte zweite Badbehältervorrichtung Fördermittel zur Beförderung des Produkts durch diese hindurch zu einem außerhalb der besagten zweiten Badbehältervorrichtung befindlichen Dränierabschnitt umfaßt, und einen Kühlraum, wobei besagter Dränierabschnitt Fördermittel zur Beförderung des Produkts durch diesen hindurch und durch den besagten Kühlraum zu einem Endabgabepunkt umfaßt.

33. Die Erfindung nach Anspruch 32, wobei die besagte zweite Badbehältervorrichtung Überwachungsmittel zum Überwachen des Zustands des Inhalts der besagten zweiten Badbehältervorrichtung einschließt.

34. Die Erfindung nach Anspruch 33, wobei das besagte Überwachungsmittel Konditioniermittel zur Wiederherstellung des Zustands des Inhalts der besagten zweiten Badbehältervorrichtung umfaßt, wenn ein vorbestimmter Zustand nachgewiesen wird.

35. Die Erfindung nach Anspruch 32, wobei besagter Dränierabschnitt Mittel zum Weiterleiten des aus besagtem Dränierabschnitt zurückgewonnenen Materials zu der besagten zweiten Badbehältervorrichtung umfaßt.

**Revendications**

1. Procédé de traitement de légumes frais tels qu'épices, herbes et produits semblables comprenant les étapes suivantes :

a. lavage du produit dans un premier bain liquide contenant une solution anti-brunissement ;

b. élimination du liquide excédentaire à la surface du premier bain ;

c. immersion du produit dans un second bain liquide contenant un humectant à une température située entre 80 et 150°C pour abaisser la teneur en eau du produit ;

d. élimination du liquide excédentaire à la surface du second bain.

2. Invention selon la revendication 1, comportant l'étape de lavage du produit avant l'étape (a).

3. Invention selon la revendication 2, où l'étape de lavage du produit avant l'étape (a) comporte le lavage du produit au moyen d'un liquide réfrigéré.

4. Invention selon la revendication 1, où l'étape de lavage du produit dans le premier bain comporte l'utilisation d'un mélange d'acide citrique et d'acide ascorbique dans l'eau du premier bain.

5. Invention selon la revendication 4, où le mélange est une solution de 0,1% à 1,0% d'un mélange d'acide citrique et d'acide ascorbique.

6. Invention selon la revendication 1, où l'étape de lavage du produit dans le premier bain comporte l'utilisation d'un mélange d'acide isoascorbique et d'acide citrique dans l'eau du premier bain.

7. Invention selon la revendication 6, où le mélange est une solution de 0,1% à 1,0% d'une solution d'acide isoascorbique et d'acide citrique.

8. Invention selon la revendication 1, où l'étape d'élimination du liquide superficiel excédentaire comprend le drainage du produit.

9. Invention selon la revendication 8, où l'étape d'élimination du liquide superficiel excédentaire comprend de plus, après le drainage du produit, le séchage du produit afin de réduire la teneur en humidité de ce produit.

10. Invention selon la revendication 9, où l'étape de séchage du produit comprend l'exposition du produit à une chaleur suffisant à réduire la teneur en humidité du produit à un niveau situé entre 30% et 80% en poids.

11. Invention selon la revendication 9, où l'étape de séchage du produit comprend l'exposition du produit à une chaleur suffisant à réduire la teneur en humidité du produit à un niveau situé entre 60% et 80% en poids.

12. Invention selon la revendication 9, où l'étape de séchage comprend l'utilisation d'un séchoir à lit fluidisé pour sécher le produit.

13. Invention selon la revendication 12, où l'étape de séchage comprend le passage sur le produit d'un souffle d'air à une température d'environ 25 à 38°C.

14. Invention selon la revendication 1, où l'humectant est sélectionné dans le groupe se composant de glycérine, sorbitol et de propylène-glycol.

15. Invention selon la revendication 1, où le second bain se compose de glycérine.

16. Invention selon la revendication 1, où le second bain se compose de glycérine synthétique.

17. Invention selon la revendication 1, où le procédé, durant l'étape (d), comporte l'étape de récupération du liquide du second bain et de recyclage de ce liquide récupéré dans le second bain.

18. Invention selon la revendication 1, où le procédé, après l'étape (d), comporte l'étape de refroidissement du produit.

19. Invention selon la revendication 18, où l'étape de refroidissement du produit comporte le passage du produit à travers une chambre frigorifique dont l'atmosphère est maintenue environ de −18 à 8°C pendant une période de temps telle que la température du produit soit réduite tout au moins à la température ambiante.

20. Invention selon la revendication 1, comportant l'étape de concassage du produit après l'étape (d).

21. Invention selon la revendication 1, où le produit est de type à tige et le procédé comporte, après l'étape (d), l'étape d'élimination des tiges du produit qui est suivie de l'étape de concassage du produit.

22. Invention selon la revendication 20, comprenant de plus l'étape d'emballage du produit directement après l'étape de concassage.

23. Invention selon la revendication 18, comportant l'étape de concassage du produit après l'étape (d).

24. Invention selon la revendication 18, où le produit est de type à tige et le procédé comporte, après l'étape (d), l'étape d'élimination des tiges du produit qui est suivie de l'étape de concassage du produit.

25. Invention selon la revendication 23, comprenant de plus l'étape d'emballage du produit directement après l'étape de concassage.

26. Invention selon la revendication 1, comportant l'étape de surveillance de la concentration d'humectant dans le second bain et d'addition d'humectant supplémentaire lorsque la concentration de celui-ci est repérée comme inférieure à la valeur sélectionnée.

27. Invention selon la revendication 1, où une transporteuse est prévue pour transporter le produit à travers les étapes du procédé et où le procédé comporte l'étape de transport du produit sur la transporteuse à partir d'une réserve à travers le premier bain.

28. Invention selon la revendication 27, où la transporteuse comporte des sections poreuses et où au moins certaines des étapes de drainage se font sur les dites sections poreuses.

29. Procédé de traitement de légumes frais tels qu'épices, herbes et produits semblables comprenant les étapes suivantes :

a) lavage du produit dans un liquide refroidi ;

b) lavage du produit dans un premier bain liquide contenant une solution d'acide anti-oxydant où l'acide est un mélange d'acide citrique et d'un acide sélectionné à partir du groupe composé d'un acide ascorbique et d'un acide isoascorbique ;

c) élimination du liquide excédentaire à la surface du premier bain par drainage du produit et, suite au drainage du produit, séchage du produit afin de réduire la teneur en humidité du produit jusqu'à un niveau sélectionné ;

d) immersion du produit dans un second bain liquide maintenu à une température élevée sélectionnée entre 80° et 150°C et contenant un humectant destiné à réduire la teneur en eau du produit, où l'humectant est sélectionné à partir du groupe composé de glycérine, sorbitol et propylèneglycol ;

e) élimination du liquide excédentaire à la surface du second bain par drainage du produit ;

f) refroidissement du produit par le passage du produit à travers une chambre frigorifique dont l'atmosphère est maintenue environ de −18 à 8°C pendant une période de temps telle que la température du produit soit réduite tout au moins à la température ambiante.

30. Invention selon la revendication 29, où l'étape de refroidissement du produit est exécutée en cinq minutes.

31. Invention selon la revendication 1, où le produit contient des tiges et comportant les étapes d'élimination des tiges avant le passage du produit au second bain liquide.

32. Appareil visant à exécuter le procédé selon l'une quelconque des revendications 1-31 comprenant : une transporteuse destinée à transporter le produit d'une réserve à un point de décharge, un dispositif de lavage destiné à laver le produit avec un liquide, ledit dispositif de lavage comportant une section de drainage et étant situé de sorte à recevoir le produit déchargé au dit point de décharge, le dit dispositif de lavage comportant une transporteuse destinée à transporter le produit à travers le dit dispositif de lavage jusqu'à la dite section de drainage en un autre point de décharge, une cuve de premier bain comportant une section de drainage contenant un agent liquide anti-oxydant située à côté du dit autre point de décharge, la dite cuve de premier bain comportant un moyen de transport du produit à travers le dit dispositif de lavage jusqu'à la dite section de drainage de celui-ci vers un autre point de décharge, une chambre de séchage, une cuve de second bain pour un humectant liquide, un moyen de transport du produit du dit autre point de décharge de la dite cuve de premier bain vers la dite chambre de séchage et à travers celle-ci et afin de déposer le produit dans la dite cuve de second bain, un dispositif de chauffage du contenu de la dite cuve de second bain à une température sélectionnée, la dite cuve de second bain comportant un moyen de transport du produit à travers celle-ci jusqu'à une section de drainage située à l'extérieur de la dite cuve de second bain, une chambre de refroidissement, la dite section de drainage comportant un moyen de transport du produit à travers celle-ci et à travers la dite chambre de refroidissement vers un point de décharge définitif.

33. Invention selon la revendication 32, où la dite cuve de second bain comporte un moyen de surveillance de la condition du contenu de la dite cuve de second bain.

34. Invention selon la revendication 33, où le dit moyen de surveillance comporte un moyen de conditionnement visant à restaurer la condition du contenu de la dite cuve de second bain en réaction à la détection d'une condition sélectionnée.

35. Invention selon la revendication 32, où la dite section de drainage comporte un moyen de passage du matériau récupéré par la dite section de drainage vers la dite cuve de second bain.

FRESHLY-HARVESTED HERBS

VISUAL INSPECTION + CLEANING

COLD WATER → SPRAY WASHING

DRAINING / INSPECTION

ACID SOLUTION → STEEPING

*Fig. 1.*

DRAINING

FRESH HOMECTANT

HUMECTANT RECYCLING + MONITORING SYSTEM

FLUIDIZED-BED DRYING ---- DESTEM

HEATING IN HOMECTANT ----

DRAINING HUMECTANT

RECYCLED HUMECTANT → COOLING    10

VACUUM PACKAGING OR CONTROLLED ATMOSPHERE PACKAGING

CHOPPING

DESTEMMING — STEMS

WHOLE-PLANT FRESH-LIKE HERBS

PUMPING

PACKAGING

FILLING

WHOLE-LEAF FRESH LIKE HERBS

FRESH-LIKE HERBS CHOPPED

Fig.2.

ICE → ← WATER    ACID → ← WATER

P — 18

ACID SOLUTION — 36

P        P

16    14    24    28    30

SUPPLY →

M    12    22    20    32    26    34

HUMECTANT SUPPLY

46 — MONITOR    38

54    50    42    M    44    43

56    M    40

52

CHOPPER    CHOPPER    PACKAGING